# EUROPEAN PATENT SPECIFICATION

(11) **EP 2 738 520 B1**
(45) Date of publication and mention of the grant of the patent: **11.01.2017**
(21) Application number: 12008000.7
(22) Date of filing: 28.11.2012
(51) Int. Cl.: G01C 21/26, G01C 21/32, G01C 21/36, G01C 21/20, G06T 7/00, B60W 40/06

(54) **Technique for assisting driving a vehicle based on an identified road mark**
Technik zur Unterstützung des Führens eines Fahrzeuges basierend auf einer identifizierten Straßenmarkierung
Technique d'assistance à la conduite d'un véhicule sur la base d'un marque routier identifié

(43) Date of publication of application: 04.06.2014
(73) Proprietor: Elektrobit Automotive GmbH, 91058 Erlangen (DE)
(72) Inventor: BARTELS, Florian, 90403 Nürnberg (DE)
(74) Representative: Röthinger, Rainer

(56) References cited:
- EP-A2- 1 975 565
- US-A- 6 064 925
- US-B1- 7 680 749

## Description

### Technical Field

The present disclosure generally relates to assisting driving a vehicle based on an identified road mark. The disclosure also relates to learning a distance between two such road marks.

### Background

In the past, driver assistance systems have become widely available for a large number of vehicles due to mass fabrication and decreasing costs of electronic components. One example of such a driver assistance system is a vehicle navigation system.

A vehicle navigation system possesses an inherent accuracy of position determination for the vehicle it is installed in. Due to usage of satellite-based positioning systems, such as the Global Positioning System (GPS), this accuracy is limited to the accuracy of the positioning system. In case of GPS, a positional error is in the order of 10 meters or even below.

Vehicle navigation systems or parts thereof (such as a sensor of a positioning system) may be in communication with Advanced Driver Assistance Systems (ADASs). An ADAS may, for example, be configured to change a shape of a vehicle spotlight at crossings, to change the direction of the vehicle spotlight on wiggly roads or to change the current gear selection. To perform such and other actions, the current vehicle position should be known with high accuracy. However, ADASs relying on GPS (or on a similar positioning system) inherently suffer from the positioning inaccuracy described above.

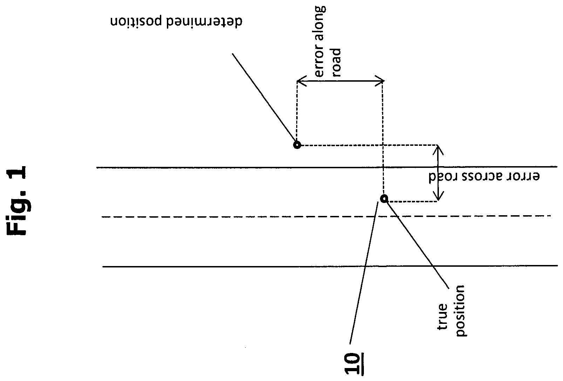

Fig. 1 shows a plan view of a vehicle 10 travelling along a road. As is shown in Fig. 1, there are basically two different types of error in relation to the true position of the vehicle on the road the vehicle is travelling on.

### Error along the road:

Basically, this type of error is caused by positioning systems (such as GPS) in a direction substantially parallel to the longitudinal view axis of the vehicle (hence, of the driver). In other words, this type of error covers a fuzziness of the vehicle position in front of/behind the vehicle.

The error along the road can be discontinuously compensated by using map information accessible to the vehicle navigation system or ADAS (e.g., from an exactly known position at the time of turning on a crossing or on a wiggly road).

### Error across the road:

This type of error is caused by positioning systems in a direction substantially perpendicular to the longitudinal view axis of the vehicle (hence, of the driver). In other words, this type of error covers a fuzziness of the vehicle position to the left/right of the vehicle.

The error across the road can also be reduced based on map information, since it can be reasonably assumed that the vehicle travels on the road and not in the range of fuzziness to the left/right of the road. Further, if taking into account the driving direction and the driving road side (e.g., right-hand road side in countries such as Germany, or left-hand road side in countries such as England), an assumption can be made on the side of the road the vehicle actually travels on, and hence the error across the road can be further reduced.

The above findings, however, leave open how the error along the street can be accounted for, especially on long straight portions of a road. In this connection, many high-end cars may have a built-in camera to detect lanes on the street. The positions of the lanes can be determined with a very high accuracy. However, while driving along the road on a straight line, the error along the street increases continuously (e.g., due to the limited accuracy of an odometer). Common odometers have an error of about at least 0.2 % of the driven distance, i.e., the error along the street increases at least by 2 meters per every driven kilometer.

EP 1 975 565 A2 may be construed to disclose a feature information collecting apparatus includeing: a vehicle position information acquiring device that acquires the vehicle position information that represents the current position of the vehicle; an image information acquiring device that acquires image information for the vicinity of the vehicle; an image recognition device that carries out image recognition processing for the recognition target object included in the image information; a recognition result storing device that stores the recognition information that represents the recognition results for the recognition target object obtained by the image recognition device, in association with information of the recognition position of the recognition target object based on the vehicle position information; and a learned feature extraction device that extracts recognition target objects that can be repeatedly recognized by image recognition as learned features based on a plurality of sets of recognition information that is related to the same place stored in a recognition result storing device due to the image information for the same place being recognized a plurality of times by image recognition, and outputs this along with the position information for the learned features.

US 6,064,925 A may be construed to disclose a navigation system comprising a mark-tracking navigator and a map-referring navigator. The mark-tracking navigator navigates the vehicle along a navigation-guiding mark on the roadway by detecting the navigation-guiding mark, and the map-referring navigator navigates the vehicle along a predetermined track on a route map of data by referring to the position of the vehicle which is detected by position-detecting means. The system selects either the mark-tracking navigator or the map-referring navigator to navigate the vehicle in correspondence with the condition of the roadway. The sections where the roadway extends straight or curves gradually are provided with the navigation-guiding mark, and the sections where the roadway branches out or merges with another or curves sharply are not provided with the navigation-guiding mark.

### Summary

Accordingly, there is a need for a technique that avoids one or more of the problems discussed above, or other problems. In particular, there is a need for compensating a positional error, such as the error along the road (e.g., on longer straight sections of the road on which the vehicle travels), for purpose of a driver assistance system. There are provided methods, apparatuses, a computer program product and a data structure according to independent claims. Developments are set forth in the dependent claims.

According to the invention, there is provided a method for assisting driving a vehicle according to claim 1.

In one refinement, the identifying of the first distinctive mark may comprise determining, in relation to the location of the vehicle, an absolute location of the first distinctive mark so as to verify the detection of the first distinctive mark. In addition or alternatively, the method may further comprise identifying the second distinctive mark on or at the road displaced from the first distinctive mark. An on-board navigation system (i.e., its map material) may be augmented or backed-up with up-to-date data directly from the road based on the identified information.

According to an aspect of the invention, there is provided a method according to claim 4.

The marks as well as the distances between the marks may be learnt "on the fly" while the vehicle is actually travelling on the road. The information thus learnt may be stored in a database. Moreover, the learnt information may be used for the same or another vehicle. This use may comprise assisting driving the vehicle as discussed herein, or other uses.

In a refinement, the storing step may further comprise storing also the absolute location of at least the first distinctive mark (and optionally of the second distinctive mark). In one realization, an on-board navigation system (i.e., its map material) may thus be augmented or backed-up with up-to-date data directly from the road.

In another refinement, the identifying step is performed using at least an acceleration sensor. In addition, a camera and/or an inclination sensor may assist the identifying step.

At least one of the first and second distinctive marks may comprise one of a marking on the road, a traffic sign or a traffic light at the road, a road crossing, a road turn, a change in road slope, an unevenness in the road, and a bump hole or a speed bump. Moreover, also a building (e.g., a house or any other permanent structure) at a road may realize one or both of the first and second distinctive marks.

According to another aspect of the invention, there is provided a computer program according to claim 8.

In another aspect of the invention, there is provided an apparatus for assisting driving a vehicle according to claim 10.

According to another aspect of the invention, there is provided an apparatus according to claim 11.

The apparatus may comprise at least one of the following: an acceleration sensor as part of the identifier, a dead reckoning system comprising at least one inertial sensor as part of the identifier and/or calculator, and a positioning sensor (e.g., of a satellite-based system such as GPS) as part of the identifier and/or calculator.

The apparatus may be implemented as at least a part of a driver assistance system such as an Advanced Driver Assistance System, ADAS. As an example, it may be implemented as at least a part of an Adaptive Front-lighting System, AFS, an Adaptive Cruise Control, ACC, or an assistant for crossings.

According to another aspect of the invention, there is provided a data structure according to claim 14.

Each entry may further comprise at least one of a fourth field adapted to store an identification of the first distinctive mark, a fifth field adapted to store an identification of the second distinctive mark, and a sixth field adapted to store a number of second distinctive marks. Optionally the third and fifth fields contain one or more entries in accordance with the number stored in the sixth field.

### Brief Description of the Drawings

The embodiments of the technique presented herein are described herein below with reference to the accompanying drawings, in which:
Fig. 1 shows an illustrative diagram of a relationship between a true vehicle position and the determined vehicle position and the associated errors;
Fig. 2 shows method embodiments which also reflect the interaction between components of apparatus embodiments;
Fig. 3 shows components comprised in exemplary device embodiments realized in the form of one or more apparatuses inside the vehicle;
Fig. 4 shows an illustrative diagram of a principle underlying both the method and apparatus embodiments concerning the calculation step or means;
Fig. 5 shows a data structure embodiment; and
Fig. 6 shows an exemplary implementation of the apparatus embodiments.

### Detailed Description

In the following description, for purposes of explanation and not limitation, specific details are set forth (such as particular signalling steps) in order to provide a thorough understanding of the technique presented herein. It will be apparent to one skilled in the art that the present technique may be practised in other embodiments that depart from these specific details. For example, the embodiments will primarily be described in the context of an ADAS; however, this does not rule out the use of the present technique in other systems and for other purposes (e.g., in connection with cartography applications).

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP) or general purpose computer. It will also be appreciated that while the following embodiments are primarily described in the context of methods and devices, the technique presented herein may also be embodied in a computer program product as well as in a system comprising a computer processor and a memory coupled to the processor, wherein the memory is encoded with one or more programs that execute the services, functions and steps disclosed herein.

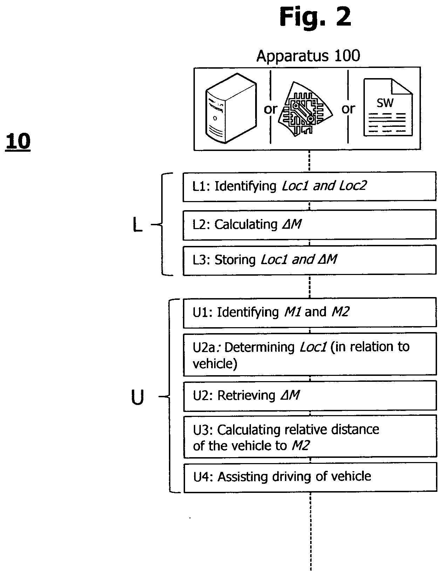

Fig. 2 illustrates method embodiments for learning at least one distance between first and second distinctive marks on or at a road and for assisting driving a vehicle and for. In the signalling diagram of Fig. 2, time aspects between signalling are reflected in the vertical arrangement of the signalling sequence as well as in the sequence numbers. It is to be noted that the time aspects indicated in Fig. 2 do not necessarily restrict any one of the method steps shown to the step sequence outlined in Fig. 2. This applies in particular to method steps that are functionally disjunctive with each other. For instance, steps L1 to L3 may pertain to a learning phase (or method) L, whereas steps U1 to U4 may pertain to a usage phase (or method) U. As shown, the learning phase L may precede the usage phase U so as to supply the usage phase U with the learnt information or contents; however, this does not preclude that the or another learning phase L is conducted concurrently with or after the usage phase U (e.g., to re-learn information or contents that might have changed). That is, the usage phase U and the learning phase L may also be performed substantially simultaneously so that the driving may be assisted, but the information or contents may be re-learnt in substantially the same moment so as to improve subsequent usage phases U.

It should further be noted that the learning phase L and the usage phase U may be performed within, by or for one and the same vehicle, or, alternatively, by, within or for different vehicles. As an example, the learning phase L may be performed by a specifically equipped vehicle so that the information or contents thus learned may be employed at a later point in time by regularly equipped vehicles.

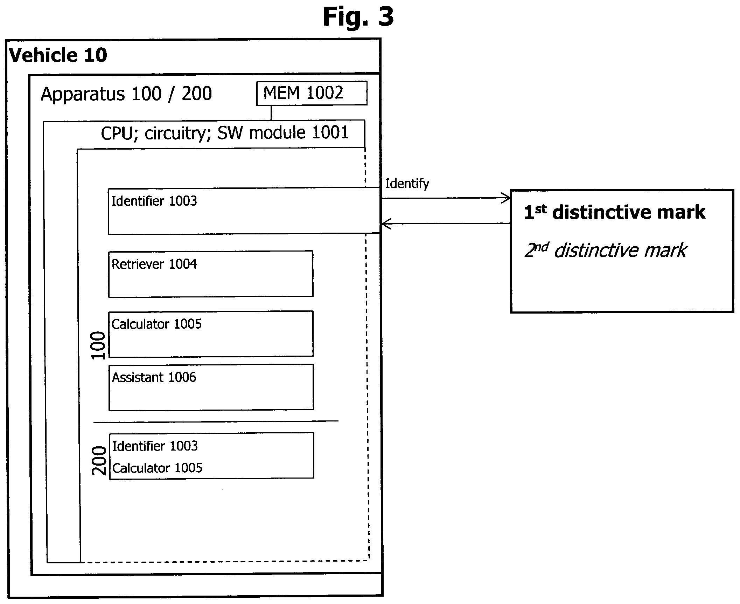

Fig. 3 shows a general embodiment of two apparatuses 100 and 200. As shown in Fig. 3, the apparatuses may (at least partially) be disposed inside one vehicle 10 or in different vehicles (not shown). However, this does not preclude that for example an optional database/memory 1002 is disposed outside the vehicle(s) 10 as an external repository that might be accessed via an air interface or similar suitable means.

As shown in Fig. 3, the apparatus 100 comprises a core functionality (e.g., one or more of a central processing unit (CPU), dedicated circuitry and/or a software module) 1001, the optional memory (and/or database) 1002, an optional transmitter (not shown) and an optional receiver (not shown). Moreover, the apparatus 100 comprises an identifier 1003, a retriever 1004, a calculator 1005 and an assistant 1006. As shown by the prolonged box of the identifier 1003, the identifier 1003 may also utilize the transmitter and/or receiver (not shown).

In turn, the apparatus 200 may comprise the identifier 1003 (either a duplicate version of the identifier 1003 of the apparatus 100, or a shared entity) and the calculator 1005 (either a duplicate version of the calculator 1005 of the apparatus 100, or a shared entity). Further, as shown by the line separating apparatuses 100 and 200, those apparatuses may be disposed as separate software entities on the same CPU 1001. This does not preclude that the apparatuses are in a closer relationship (e.g., as software code portions not clearly discernible from one another, as long as the functionality described below is preserved) or in a more remote relationship (e.g. implemented on two different processors and, optionally, even in different vehicles).

As partly indicated by the dashed extensions of the functional block of the CPU 1001, the identifier 1003, the retriever 1004, the calculator 1005 and the assistant 1006 (of the apparatus 100) as well as the identifier 1003 and the calculator 1005 (of the apparatus 200) may at least partially be functionalities running on the CPU 1001, or may alternatively be separate functional entities or means controlled by the CPU 1001 and supplying the same with information. For the apparatuses 100 and 200, the transmitter and receiver components (not shown) may be realized to comprise suitable interfaces and/or suitable signal generation and evaluation functions.

The CPU 1001 may be configured, for example, using software residing in the memory 1002, to process various data inputs and to control the functions of the memory 1002, the transmitter and the receiver (not shown) (as well the identifier 1003, the retriever 1004, the calculator 1005 and the assistant 1006 of the apparatus 100 as well as the identifier 1003 and the calculator 1005 of the apparatus 200).

The memory 1002 may serve for storing program code for carrying out the methods according to the aspects disclosed herein, when executed by the CPU 1001. Additionally, or as an alternative, the memory 1002 is configured as a database (e.g., in the form of a map database for use by a conventional navigation system).

It is to be noted that the identifier 1003 and the calculator 1005 may be provided as an integral entity. It is further to be noted that the identifier 1003 and the calculator 1005 may be implemented as physically separate entities (e.g., when disposed as stand-alone components), using routing/forwarding entities/interfaces between CPUs (e.g., when disposed as separate software on the same CPU), using functionalities for writing/reading information into/from a given memory area (e.g., when disposed as software code portions being no longer discernible) or as any suitable combination of the above. At least one of the above-described identifier 1003, retriever 1004, calculator 1005 and assistant 1006, or the respective functionalities, may also be implemented as a chipset, module or subassembly.

Referring again to the signalling diagram of Fig. 2 (to be read along with the apparatuses 100 and 200 illustrated in Fig. 3), in the usage phase U, in step U1, the identifier 1003 of the apparatus 100 is configured to identify a first distinctive mark M1 on or at a road on which the vehicle 10 is travelling. The identifier 1003 may comprise an on-board camera (not shown) of the vehicle 10 and suitable image processing functionalities.

In step U2, the retriever 1004 of the apparatus 100 is configured to retrieve, from the database in memory 1002, a distance ΔM between the identified first distinctive mark M1 and a second distinctive mark M2 on or at a road. Optionally, the identifying of the first distinctive mark may comprise a step U2a for determining, in relation to a current location of the vehicle 10, an absolute location Loc1 of the first distinctive mark (e.g., to verify the detection of the first distinctive mark). The optional step U2a may utilize a satellite-based positioning system such as GPS in the vehicle 10 (not shown) to (roughly) determine its current location.

Then, in step U3, the calculator 1005 of the apparatus 100 calculates, based on a location LocV of the vehicle 10 relative to the first distinctive mark M1, the relative distance of the vehicle 10 to the second distinctive mark M2 taking into account the distance ΔM between the first and second distinctive marks M1, M2.

The relative distance of the vehicle 10 to the second distinctive mark M2 calculated in step U3 will decrease over time as the vehicle 10 approaches the second distinctive mark M2 after having identified the first distinctive mark M1. In other words, step U3 may comprise subtracting from the distance ΔM a distance value that increases over time as the vehicle 10 travels from the first distinctive mark M1 towards the second distinctive mark M2.

For example, the relative distance between the vehicle 10 (i.e., its location LocV) and the first distinctive mark M1 may be determined using a camera (and/or radar). In this way, not only distinctive marks directly in front of the vehicle 10 can be recognized, but also distinctive marks a certain distance ahead (e.g. 50 m) of the vehicle 10. That distinctive mark M1 is (continuously) recognized until the vehicle 10 has approached the mark M1 up to a few meters (approximately 1-2 m).

Assume that the distance between the first and second marks M1, M2 is 100 m, and the first mark M1 is currently 50 m ahead of the vehicle 10, so that the second mark M2 is 150 m ahead of the vehicle 10. While driving towards the second mark M2, the relative distance to the first mark M1 may be continuously taken into account. At first, the relative distance decreases, whereas after passing/running through the first mark M1, the relative distance will increase again. Note that in this context, the present disclosure also covers means (for the learning phase L and/or the usage phase U) in order to compensate for a temporary blindness of a sensor (for instance, a camera may only be able to recognize marks at a minimum distance of 2 m ahead the vehicle 10, since otherwise the hood of vehicle 10 blocks the view field of the camera) to the mark substantially at the moment of passing/running through the mark. Such means may encompass additional sensors that assume the responsibility of the temporarily blind sensor (in the above example, for instance another camera or the like at the heading/trailing end of the vehicle 10), but also other non-detectional means such a as a clock or counter that simply counts the time from the mark "vanishing" out of the view field, so that in conjunction with the vehicle speed/acceleration, still an informed estimate of the relative distance can be made.

As another example, if the distinctive mark M1 (or M2) to be recognized is a bump hole (or a speed bump), for example the acceleration sensor may recognize the bump hole/speed bump at the very moment of passing the bump hole/speed bump. For instance, the "very moment" may be equated with a front wheel passing that mark, and at that very moment, the relative distance between the vehicle 10 and the mark may be assumed to be "zero". Note that there is an amount of tolerable fuzziness concerning the location of the vehicle 10, since it is in principle irrelevant which spot of the vehicle 10 is equated with the vehicle's location (the spot may be the front bumper, the hood, the roof, the rear bumper, but also more theoretical spots such as the center of gravity of the vehicle 10, the geometrical center of the vehicle 10 or the site of a navigation apparatus in the vehicle 10).

To sum up, the calculation of the relative distance between the distinctive mark M1 or M2 and the vehicle 10 may depend also on the type of sensor used:
- An acceleration sensor may be used to detect bump holes or speed bumps, as described above. As said, the moment of the vehicle 10 running over the speed bump/bump hole may be taken as an indication of the distance being zero. Moreover, the acceleration sensor may be augmented by an inclination sensor so as to differentiate between a "positive" height speed bump and a "negative" height bump hole.
- In case a camera is used to detect a distinctive mark, the camera's homogenous transform coordinate system (including both its relative position, inclination (yaw, pitch) and camera parameters such as the focal width of the objective) should be compensated for. For instance, a track recognition should be freed of the aberration of the image data, since otherwise a straight road might be misinterpreted as a curved road. Then, the relative distance can be calculated, for example, from the position of the mark (e.g., a pixel coordinate) from the thus compensated image data.
- In case a radar is used to detect a distinctive mark, the relative distance can be deducted directly e.g. from the Doppler condition. Moreover, the term "radar" also encompasses functional equivalents such as lidar, ultrasonic detection, infrared and the like.

Furthermore, any latencies between transmission and reception of a detection signal may be compensated. Note that in the case of the camera, the signal runtime of the image may be considered as the speed of light; however, the camera nevertheless has other latencies such as the time needed for frame readout, the time for image recognition algorithms (such as filters) to work, etc. Also mechanical sensors have some forms of latencies, including for example the runtime of the electrical signal from encoding to actual detection. Such latencies may be compensated using an (additional) odometer (to be described herein below). In a simpler version, the latencies may also be learned during the learning phase L or may be set beforehand. Alternatively, the latencies may also be approximately compensated by multiplying the current vehicle speed with the latency, thus yielding an approximate of the distance travelled during the latency.

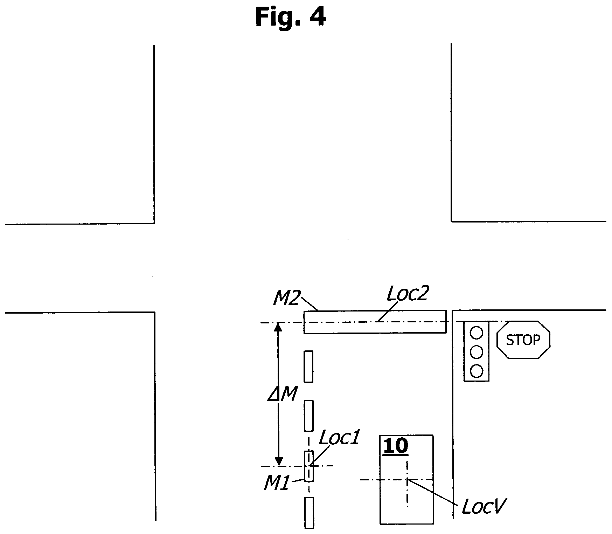

Fig. 4 shows an illustrative diagram of a principle underlying both the method and apparatus embodiments concerning the calculating step or means. Note that the following features are not to be construed as limiting to the present disclosure, but as an exemplary embodiment. Further, the following features are described in the light of step U3 (calculating) of the usage phase U. In principle, those features are as well applicable to step L2 of the learning phase L (to be described herein below).

The calculator 1005 may be constituted by or comprise an odometer. For instance, a mechanical sensor may generate an electrical signal in relation to the distance travelled. A pulse (or alternatively, as sinusoidal signal, sawtooth or any other signal) may be generated per each travelled unit distance, which unit distance may be sufficiently small to provide sufficient spatial resolution, such as a few centimetres (e.g., 2 cm). The count value of the pulses may be transmitted or distributed (e.g., via a bus, such as a Controller Area Network, CAN, bus) per unit time to other components, such as the assistant 1006 or the database in memory 1002. The unit time may be a trade-off between freshness of the data retrieved and efficiency of the amount of data transmitted.

For instance, the count value may be transmitted/distributed in intervals of 50 msec. The count value may either comprise an incremental value (such as the count of pulses since the last transmission or distribution) or an absolute value (such as a count value since the last start of the vehicle 10). In addition, for example to prevent a storage overflow especially for the absolute value, the count value may be truncated as modulo with respect to a suitable base, such as 2048. In the latter case, it should be noted that the transmission interval should be chosen sufficiently small and/or a modulo basis of the transmission interval sufficiently big (if applicable) so as to avoid data loss due to multiple truncations.

In addition, all input data (such as the recognized mark and/or the odometer pulses) can be supplemented with a time stamp. The time stamp may be indicative of the instant the identifier 1003 (e.g., a camera) of the vehicle 10 has taken a signal (e.g., an image) from which the mark is identified, or the time the count value is received. In order to avoid clock offset problems, it is preferred that the time stamps relate to the same timer.

The following distance calculation (that may in particular be employed in the learning phase L) is an example with relation to Fig. 4, but it can also be used in connection with the calculation step U3 in the usage phase U. In the example, the left number indicates the time stamp (unitless in this example), and the right statement an event occurring at the corresponding time stamp, such as number of count pulses (i.e., the count value since the previous event when using an incremental odometer) or other events.
100 → 100 pulses from the odometer
100 → identification of first distinctive mark (such as road mark M1)
150 → 100 pulses from the odometer
200 → 120 pulses from the odometer
300 → 120 pulses from the odometer
300 → identification of second distinctive mark (such as stop line M2)

In this example, 340 pulses have been counted between time stamp 100 (identification of mark M1) and time stamp 300 (identification of mark M2). Since each pulse is output per unit distance (for instance, 2 cm, a value which may be preset or may be learnt during calibration), a distance of 680 cm = 6.80 m has been travelled between time stamp 100 and time stamp 300 (i.e., between the identification of mark M1 and mark M2). The corresponding distance may then be written in accordance with storing step L3 (as will be described in more detail below) into the database in memory 1002.

When, in the usage phase U, the car identifies road mark M1, it can immediately retrieve the relative distance to road mark M2 (i.e., 6.80 m) from the database in memory 1002. From that relative distance, the distance traveled by the car after the identification of a road mark M1, as determined based on the number of pulses from the odometer after the identification of road mark M1, is subtracted from the relative distance so as to continuously calculate the (current) relative distance of the traveling vehicle 10 to the second road mark M2 in step U3.

The above described pulse-based implementation works best on straight roads and for compensating an error along the street. In order to augment the apparatuses 100 and 200 in case of a vehicle turn, it is preferred that a sensor for detecting the current orientation is provided; such a sensor may be an additional gyrometer, or alternatively, two odometers may be provided, one for left wheel of the vehicle 10 and one for a right wheel of the vehicle 10. In the latter case, an offset between the two odometer counts may yield the turning angle of vehicle 10; in addition, or alternatively, other means for determining the turning angle may be utilized, such as the steering angle of a steering wheel or an offset in revolutions in a differential transmission of the vehicle.

In some cases, it is to be noted that odometer pulses and road marks are not determined simultaneously or in dependence from one another. In those cases, it is possible to interpolate between the detected positions Loc1 and Loc1 of the marks M1 and M2 (e.g., in relation to the vehicle position LocV). In case a latency in mark recognition (e.g., involved in image recognition) and/or a latency of count value distribution via a bus are/is not neglectable, a subtractive correction factor may be preset or may be determined by other means.

Resuming the flow of the usage phase U, in an optional step U4, the assistant 1006 of apparatus 100 is configured to assist the driving of the vehicle based on the calculated relative distance ΔM. As said, step U4 may be omitted or replaced by another step for different applications such as the provisioning or verification of cartography data. Such cartographic data may be used for or contained in map database as used by conventional navigation systems.

In turn, as stated herein above, before, after or concurrently with the usage phase U, the learning phase L may be performed by apparatus 200. Accordingly, in step L1, the identifier 1002 of the apparatus 200 is configured to identify the first and second distinctive marks M1 and M2. Any one of the above-described means, including an on-board camera of the vehicle 10, may be utilized for this purpose.

Then, in step L2, the calculator 1005 of the apparatus 200 is configured to calculate the distance ΔM between the first and second distinctive marks M1 and M2. The scheme described above in relation to Fig. 4 may be utilized for this purpose.

Finally, in step L3, the database/memory 1002 of the apparatus 200 is configured to store the distance between the first and second distinctive marks. Optionally, the storing step or means 1002 may further comprise storing also the absolute location Loc1 of at least the first distinctive mark. To this end, a GPS sensor (not shown) may provide a coarse absolute position. The coarse position may be augmented with a finer position that may be provided by the above-described odometer(s).

As mentioned before, the identifying step or means 1003 may use a camera. In this case, a dedicated camera may be used; however, it is also possible to exploit an existing camera, such as one connected to an ADAS or infotainment system of the vehicle 10. Modern ADASs already include cameras for sign detection and lane recognition.

The camera may introduce additional latency due to image recognition processing time; this is countered by the benefit of recognizing marks M1, M2 not directly inherent to the road (such as houses or other points of interest not recognizable for other sensors). In one example, the first mark M1 and/or the second mark M2 may comprise one of a marking on the road, a traffic sign or a traffic light at the road (as is shown in Fig. 4). However, the marks may be also be items less traffic-related, such as a road crossing itself, a road turn, a change in road slope that may be identified (using, e.g., an acceleration or inclination sensor), an unevenness (using, e.g., a sensor for acceleration and shock) in the road, or a bump hole that may be identified (using, e.g., the camera as optical recognition means). In principle, any distinctive/discernible mark can be used, as long as the mark has a fixed positional relationship to the road; this might even include marks such as trees, buildings or construction sites (at least as long as they persist).

Moreover, a dead reckoning system comprising at least one inertial sensor may be part of one or both of the identifier 1003 and the calculator 1005. The inertial sensor and also an absolute positioning sensor (such as a GPS sensor) may already be available in a navigation system in the vehicle 10. Further, the dead reckoning system may include as little equipment as one odometer. As described above, the one odometer may be augmented by a second odometer and/or a gyrometer.

The apparatus 100 and/or the apparatus 200 may be implemented as at least a part of an ADAS. More particularly, the apparatuses 100 and/or 200 may be a part of an Adaptive Front-lighting System (AFS), an Adaptive Cruise Control (ACC), an assistant for crossings, or any other ADAS application.

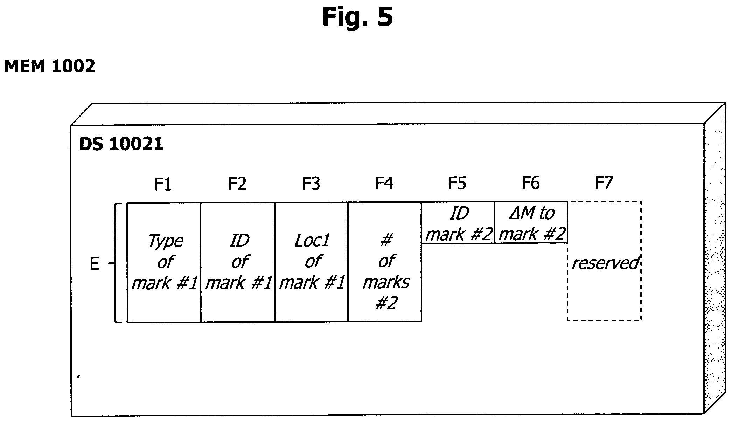

Fig. 5 shows a data structure embodiment for use by the apparatus 100 and/or the apparatus 200. The data structure (DS) 10021 is configured for storing at least one distance ΔM between the first distinctive mark M1 and the second distinctive mark M2, and for assisting driving the vehicle 10 (e.g., upon an ADAS operation). It is noted that the data structure 10021 may take any form suitable for data storage and retrieval; in particular, the data structure 10021 may be adapted to special constraints of the vehicle 10, such as sustainability of the stored content even during or beyond a cranking/ignition phase of the vehicle 10. The data structure 10021 may be used by the database in memory 1002 of vehicle 10 (see Fig. 3) for storing the data acquired for storing the data acquired in the learning phase L (see Fig. 2).

As shown in Fig. 5, the data structure 10021 comprises a plurality of entries E, wherein each entry E comprises a first field F1 adapted to store a type of the first distinctive mark M1, a second field F3 adapted to store an absolute location Loc1 of the first distinctive mark M1, and a third field F6 adapted to store the distance ΔM between the first distinctive mark M1 and the second distinctive mark M1.

Optionally, in the data structure 10021, each entry E may further comprise at least one of a fourth field F2 adapted to store an identification of the first distinctive mark M1, a fifth field F5 adapted to store an identification of the second distinctive mark M2, and a sixth field F4 adapted to store a number of second distinctive marks associated with the first distinctive mark. The third and fifth fields F2, F5 may contain one or more entries in accordance with the number stored in the sixth field.

In an exemplary realization, the database 1002 (comprising data sets in accordance with the above data structure 10021) may store data for a plurality of crossings. In such an implementation, the following word widths may be assigned to the above fields:
- F1: 1 byte for type of significant mark (e.g., "left arrow", "dashed line start", etc.)
- F2: 4 bytes for significant mark ID (e.g., a unique number)
- F3: 8 bytes for absolute position of mark (e.g., latitude and longitude with an accuracy of, e.g., 15 meters)
- F4: 1 byte for number of next marks
- F5: 4 bytes for ID of next ("second") mark (e.g., unique number)
- F6: 4 bytes for distance to next mark (e.g., up to 4km distance with a resolution in the order of millimetres)
- F7: 2 bytes reserved (e.g., for future use)

In total, the example may store up to 24 bytes per mark or 43,690 marks (presupposing only one "next mark") per 1 MByte. Map material currently stored is in the order of 18 GByte, and may be stored on a 32 GByte SD-Card, leaving up to 14 GByte open for other purposes, such as the present ADAS enhancement. For instance, per 1 GByte, about 8 Million 4-leg crossings may be stored (in that case, 128 byte per crossing). Such map material may be ordered via an Internet connection (such as for Google™ Streetview™), wherein the data rate required for the present disclosure is much lower than necessary for Google™ Streetview™.

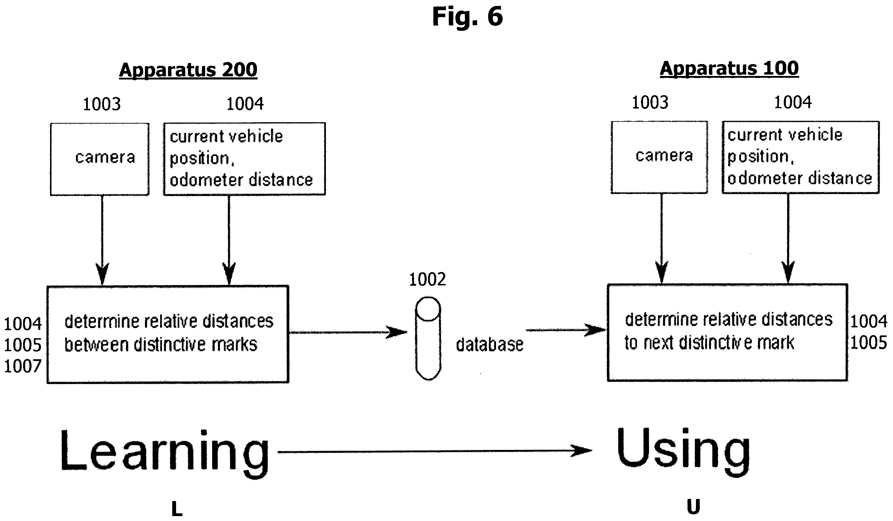

Finally, Fig. 6 shows an exemplary implementation of the apparatus embodiments 100, 200, to which the present disclosure is not to be restricted to. A camera as part of the identifier 1003 detects distinctive marks M1, M2 like signs, arrows on streets, crossings (e.g., lines on street).

Furthermore, a dead reckoning system as part of the calculator 1005 with inertial sensors (e.g., gyrometer and odometer) is able to measure distances ΔM between the distinctive marks. Important road information like crossings, turnings (e.g., wiggly roads without crossings) can also be detected with inertial sensors and/or using map material.

A third component as part of the retriever 1004 reads and/or stores relative information between distinctive marks. The information could be stored locally in the database 1002 or via mobile communication technologies in a global database 1002. A fourth component as part of the calculator 1005 uses current inertial sensor data, camera information (current/previous distinctive marks, like arrow on road) and stored relative data to calculate the current distance ΔM to other distinctive marks M2 (like a crossing).

Again, the process illustrated in Fig. 6 includes two different phases:
1) A relative distance ΔM between distinctive marks M1, M2 is determined (learnt") and stored in the learning phase L, as described above.
2) A known distinctive mark M1 is recognized when detecting it (again),
wherein the relative distance ΔM towards, for example, a crossing as a second distinctive mark 112 is known with a small error along the road.

One of the advantages of present disclosure is that the relative distance to, for example, crossings (or other marks) can be determined with a very high accuracy. Importantly, the distance is valid for the actual, real crossing (streets), not the digitalized crossing in the map material. Moreover, the accuracy is very high when the distance is short (e.g., 20 cm when the vehicle 10 is 100m in front of a crossing); the accuracy will get higher with shorter distances, wherein a peak accuracy is reached short before the second mark M2.

Depending on the database in memory 1002 (local or remote configuration), the coverage of crossing and other marks can improve over time. It is also possible that multiple vehicles being equipped with the above-described apparatuses 100 and/or 200 share their respective learnt distances.

It is believed that the advantages of the technique presented herein will be fully understood from the foregoing description, and it will be apparent that various changes may be made in the form, constructions and arrangement of the exemplary aspects thereof.

Because the technique presented herein can be varied in many ways, it will be recognized that the invention should be limited only by the scope of the claims that follow.

## Claims

1. A method for assisting driving a vehicle (10), the method being at least partially performed in the vehicle and comprising the steps of:
- identifying (U1) a first distinctive mark (M1) on or at a road on which the vehicle is travelling;
- retrieving (U2), from a database (1002), a distance between the first distinctive mark and a second distinctive mark (M2) on or at a road;
- calculating (U3), based on a location of the vehicle relative to the first distinctive mark, the relative distance of the vehicle to the second distinctive mark taking into account the distance between the first and second distinctive marks; and
- assisting (U4) the driving of the vehicle based on the calculated relative distance,
**characterized in that**:
the identifying step is performed using an acceleration sensor.

2. The method according to claim 1, wherein the identifying of the first distinctive mark comprises:
- determining (U2a), in relation to the location of the vehicle, an absolute location (Loc1) of the first distinctive mark so as to verify the identification of the first distinctive mark.

3. The method according to claim 1 or 2, further comprising:
- identifying the second distinctive mark on or at the road, the second distinctive mark being displaced from the first distinctive mark.

4. A method for learning at least one distance between a first distinctive mark (M1) on or at a road and at least one second distinctive mark (M2) on or at a road, the method being at least partially performed in a vehicle and comprising the steps of:
- identifying (L1) the first and second distinctive marks;
- calculating (L2) the distance between the first and second distinctive marks;
and
- storing (L3) the distance between the first and second distinctive marks, **characterized in that**:
the identifying step is performed using an acceleration sensor.

5. The method according to claim 4, wherein the storing step further comprises:
- storing also the absolute location of at least the first distinctive mark.

6. The method according to any one of claims 1 to 5, wherein the identifying step is further performed using a camera.

7. The method according to any one of claims 1 to 6, wherein at least one of the first and second distinctive marks comprises one of:
- a road crossing;
- a road turn;
- a change in road slope;
- an unevenness in the road; and
- a bump hole or a speed bump.

8. A computer program product comprising program code portions for performing the method of any one of the preceding claims when the computer program product is executed on one or more computing devices.

9. The computer program product of claim 8, stored on a computer readable recording medium.

10. An apparatus (100) for assisting driving a vehicle (10), the apparatus being configured to be at least partially comprised in the vehicle, and comprising:
- an identifier (1003) adapted to identify a first distinctive mark (M1) on or at a road on which the vehicle is travelling;
- a retriever (1004) adapted to retrieve, from a database (1002), a distance (ΔM) between the first distinctive mark and a second distinctive mark (M2) on or at a road;
- a calculator (1005) adapted to calculate, based on the location of the vehicle relative to the first distinctive mark, the relative distance of the vehicle to the second distinctive mark taking into account the distance between the first and second distinctive marks; and
- an assistant (1006) adapted to assist the driving of the vehicle based on the calculated relative distance,
**characterized in that**:
- an acceleration sensor is a part of the identifier (1003).

11. An apparatus (200) for learning at least one distance between a first distinctive mark (M1) on or at a road and at least one second distinctive mark (M2) on or at a road, the apparatus being configured to be at least partially comprised in the vehicle, and comprising:
- an identifier (1003) adapted to identify the first and second distinctive marks;
- a calculator (1005) adapted to calculate the distance between the first and second distinctive marks; and
- a database (1002) adapted to store the distance between the first and second distinctive marks,
**characterized in that**:
- an acceleration sensor is a part of the identifier (1003).

12. The apparatus according to claim 10 or 11, comprising at least one of the following:
- an additional camera as further part of the identifier (1003);
- a dead reckoning system comprising at least one inertial sensor as part of the calculator (1005); and
- a positioning sensor as part of the calculator (1005).

13. The apparatus according to any one of claims 10 to 12, wherein the apparatus is implemented as at least a part of an Advanced Driver Assistance System, ADAS, in particular as at least a part of:
- an Adaptive Front-lighting System, AFS;
- an Adaptive Cruise Control, ACC; or
- an assistant for crossings.

14. A data structure (10021) for storing at least one distance between a first distinctive mark (M1) on or at a road and a second distinctive mark (M2) on or at a road, and for assisting driving a vehicle (10), the data structure comprising a plurality of entries (E), each entry comprising:
- a first field (F1) adapted to store a type of the first distinctive mark;
- a second field (F3) adapted to store an absolute location of the first distinctive mark; and
- a third field (F6) adapted to store a distance (ΔM) between the first distinctive mark and the second distinctive mark,
**characterized in that**:
the type of the first distinctive mark is determined using an acceleration sensor.

15. The data structure according to claim 14, wherein each entry further comprises at least one of:
- a fourth field (F2) adapted to store an identification of the first distinctive mark;
- a fifth field (F5) adapted to store an identification of the second distinctive mark; and
- a sixth field (F4) adapted to store a number of second distinctive marks, wherein:
- the third and fifth fields contain one or more entries in accordance with the number stored in the sixth field.

## Patentansprüche

1. Verfahren zum Unterstützen des Fahrens eines Fahrzeugs (10), wobei das Verfahren zumindest teilweise in einem Fahrzeug durchgeführt wird und die nachfolgenden Schritte umfasst:
- Identifizieren (U1) eines ersten Erkennungszeichens (M1) auf oder an einer Straße, auf der sich das Fahrzeug bewegt;
- Abrufen (U2), von einer Datenbank (1002), einer Distanz zwischen dem ersten Erkennungszeichen und einem zweiten Erkennungszeichen (M2) auf oder an einer Straße;
- Berechnen (U3), basierend auf einem Ort des Fahrzeugs relativ zu dem ersten Erkennungszeichen, des relativen Abstands des Fahrzeugs zu dem zweiten Erkennungszeichen unter Berücksichtigung der Distanz zwischen dem ersten und zweiten Erkennungszeichen; und
- Unterstützen (U4) des Fahrens des Fahrzeugs basierend auf der berechneten relativen Distanz,
**dadurch gekennzeichnet, dass**:
der Schritt des Identifizierens unter Verwendung eines Beschleunigungssensors durchgeführt wird.

2. Verfahren gemäß Anspruch 1, wobei das Identifizieren des ersten Erkennungszeichens umfasst:
- Ermitteln (U2a), in Bezug auf den Ort des Fahrzeugs, eines absoluten Ortes (Loc1) des ersten Erkennungszeichens, um die Identifizierung des ersten Erkennungszeichens zu verifizieren.

3. Verfahren gemäß Anspruch 1 oder 2, des Weiteren umfassend:
- Identifizieren des zweiten Erkennungszeichens auf oder an der Straße, wobei das zweite Erkennungszeichen bezüglich des ersten Erkennungszeichens versetzt ist.

4. Verfahren zum Lernen mindestens eines Abstands zwischen einem ersten Erkennungszeichen (M1) auf oder an einer Straße und mindestens einem zweiten Erkennungszeichen (M2) auf oder an einer Straße, wobei das Verfahren zumindest teilweise in einem Fahrzeug durchgeführt wird und die nachfolgenden Schritte umfasst:
- Identifizieren (L1) des ersten und zweiten Erkennungszeichens;
- Berechnen (L2) des Abstands zwischen dem ersten und zweiten Erkennungszeichen; und
- Speichern (L3) des Abstands zwischen dem ersten und zweiten Erkennungszeichen,
**dadurch gekennzeichnet, dass**:
der Schritt des Identifizieren unter Verwendung eines Beschleunigungssensors durchgeführt wird.

5. Verfahren gemäß Anspruch 4, wobei der Schritt des Speicherns des Weiteren umfasst:
- Speichern auch des absoluten Orts von zumindest dem ersten Erkennungszeichen.

6. Verfahren gemäß einem der Ansprüche 1 bis 5, wobei der Schritt des Identifizierens ferner unter Verwendung einer Kamera durchgeführt wird.

7. Verfahren gemäß einem der Ansprüche 1 bis 6, wobei mindestens eines von dem ersten und zweiten Erkennungszeichen eines der Nachfolgenden umfasst:
- eine Straßenkreuzung;
- eine Straßenbiegung;
- eine Veränderung einer Straßenneigung;
- eine Unebenheit in der Straße; und
- ein Schlagloch oder eine Schwelle zur Geschwindigkeitsbegrenzung.

8. Computerprogramm-Produkt, das Programm-Codeteile zum Durchführen des Verfahrens eines der vorangegangenen Ansprüche, wenn das Computerprogramm-Produkt auf einem oder mehreren Computergeräten ausgeführt wird, umfasst.

9. Computerprogramm-Produkt gemäß Anspruch 8, das auf einem Computerlesbaren Speichermedium gespeichert ist.

10. Vorrichtung (100) zum Unterstützen des Fahrens eines Fahrzeugs (10), wobei die Vorrichtung dazu eingerichtet ist, zumindest teilweise in dem Fahrzeug umfasst zu sein, und umfasst:
- einen Identifizierer (1003), eingerichtet zum Identifizieren eines ersten Erkennungszeichens (M1) auf oder an einer Straße, auf der sich das Fahrzeug bewegt;
- eine Abrufvorrichtung (1004), eingerichtet zum Abrufen, von einer Datenbank (1002), eines Abstands (ΔM) zwischen dem ersten Erkennungszeichen und einem zweiten Erkennungszeichen (M2) auf oder an einer Straße;
- einen Berechner (1005), eingerichtet zum Berechnen, basierend auf einem Ort des Fahrzeugs relativ zu dem ersten Erkennungszeichen, des relativen Abstands des Fahrzeugs zu dem zweiten Erkennungszeichen unter Berücksichtigung des Abstands zwischen dem ersten und zweiten Erkennungszeichen; und
- einen Unterstützer (1006), eingerichtet zum Unterstützen des Fahrens des Fahrzeugs basierend auf dem berechneten relativen Abstand,
**dadurch gekennzeichnet, dass**:
ein Beschleunigungssensor ein Teil des Identifizierers (1003) ist.

11. Vorrichtung (200) zum Lernen mindestens eines Abstands zwischen einem ersten Erkennungszeichen (M1) auf oder an einer Straße und mindestens einem zweiten Erkennungszeichen (M2) auf oder an einer Straße, wobei die Vorrichtung dazu eingerichtet ist, zumindest teilweise in dem Fahrzeug umfasst zu sein, und umfasst:
- einen Identifizierer (1003), eingerichtet zum Identifizieren des ersten und zweiten Erkennungszeichens;
- einen Berechner (1005), eingerichtet zum Berechnen des Abstands zwischen dem ersten und zweiten Erkennungszeichen; und
- eine Datenbank (1002), eingerichtet zum Speichern des Abstands zwischen dem ersten und zweiten Erkennungszeichen,
**dadurch gekennzeichnet, dass**:
ein Beschleunigungssensor ein Teil des Identifizierers (1003) ist.

12. Vorrichtung gemäß Anspruch 10 oder 11, die mindestens eines der Folgenden umfasst:
- eine zusätzliche Kamera als weiteren Teil des Identifizierers (1003);
- ein Koppelnavigationssystem, das mindestens einen Trägheitssensor als Teil des Berechners (1005) umfasst; und
- einen Positionssensor als Teil des Berechners (1005).

13. Vorrichtung gemäß einem der Ansprüche 10 bis 12, wobei die Vorrichtung zumindest als Teil eines Fahrerassistenzsystems (Advanced Driver Assistance System, ADAS) und insbesondere zumindest als Teil von einem der Nachfolgenden implementiert ist:
- ein adaptives Frontlichtsystem (Adaptive Front-lighting System, AFS);
- eine adaptive Geschwindigkeitsregelung (Adaptive Cruise Control, ACC); oder
- einen Kreuzungsassistenten.

14. Datenstruktur (10021) zum Speichern mindestens eines Abstands zwischen einem ersten Erkennungszeichen (M1) auf oder an einer Straße und einem zweiten Erkennungszeichen (M2) auf oder an einer Straße und zum Unterstützen des Fahrens eines Fahrzeugs (10), wobei die Datenstruktur eine Vielzahl von Einträgen (E) umfasst, wobei jeder Eintrag umfasst:
- ein erstes Feld (F1), eingerichtet zum Speichern eines Typs des ersten Erkennungszeichens;
- ein zweites Feld (F3), eingerichtet zum Speichern eines absoluten Ortes des ersten Erkennungszeichens; und
- ein drittes Feld (F6), eingerichtet zum Speichern eines Abstands (ΔM) zwischen dem ersten Erkennungszeichen und den zweiten Erkennungszeichen,
**dadurch gekennzeichnet, dass**:
der Typ des ersten Erkennungszeichens unter Verwendung eines Beschleunigungssensors ermittelt wird.

15. Datenstruktur gemäß Anspruch 14, wobei jeder Eintrag des Weiteren mindestens eines der Nachfolgenden umfasst:
- ein viertes Feld (F2), eingerichtet zum Speichern einer Identifizierung des ersten Erkennungszeichens;
- ein fünftes Feld (F5), eingerichtet zum Speichern einer Identifizierung des zweiten Erkennungszeichens; und
- ein sechstes Feld (F4), eingerichtet zum Speichern einer Anzahl von zweiten Erkennungszeichen, wobei:
- das dritte und fünfte Feld einen oder mehrere Einträge gemäß der Anzahl, die in dem sechsten Feld gespeichert ist, enthalten.

## Revendications

1. Procédé d'assistance à la conduite d'un véhicule (10), le procédé étant au moins partiellement réalisé dans un véhicule et comprenant les étapes consistant à :
- identifier (U1) un premier marquage distinctif (M1) sur ou au niveau d'une route sur laquelle le véhicule se déplace ;
- extraire (U2), à partir d'une base de données (1002), une distance entre le premier marquage distinctif et un deuxième marquage distinctif (M2) sur ou au niveau d'une route ;
- calculer (U3), sur la base d'une position du véhicule par rapport au premier marquage distinctif, la distance relative du véhicule par rapport au deuxième marquage distinctif en prenant en compte la distance entre les premier et deuxième marquages distinctifs ; et
- assister (U4) la conduite du véhicule sur la base de la distance relative calculée,
**caractérisé en ce que**
l'étape d'identification est réalisée en utilisant un capteur d'accélération.

2. Procédé selon la revendication 1, dans lequel l'identification du premier marquage distinctif comprend l'étape consistant à :
- déterminer (U2a), en liaison avec la position du véhicule, une position absolue (Loc1) du premier marquage distinctif de façon à vérifier l'identification du premier marquage distinctif.

3. Procédé selon la revendication 1 ou 2, comprenant en outre l'étape consistant à :
- identifier le deuxième marquage distinctif sur ou au niveau de la route, le deuxième marquage distinctif étant déplacé par rapport au premier marquage distinctif.

4. Procédé d'apprentissage d'au moins une distance entre un premier marquage distinctif (M1) sur ou au niveau d'une route et d'au moins un deuxième marquage distinctif (M2) sur ou au niveau d'une route, le procédé étant au moins partiellement réalisé dans un véhicule et comprenant les étapes consistant à :
- identifier (L1) les premier et deuxième marquages distinctifs ;
- calculer (L2) la distance entre les premier et deuxième marquages distinctifs ; et
- mémoriser (L3) la distance entre les premier et deuxième marquages distinctifs,
**caractérisé en ce que** :
l'étape d'identification est réalisée en utilisant un capteur d'accélération.

5. Procédé selon la revendication 4, dans lequel l'étape de mémorisation comprend en outre l'étape consistant à :
- mémoriser également la position absolue d'au moins le premier marquage distinctif.

6. Procédé selon l'une quelconque des revendications 1 à 5, dans lequel l'étape d'identification est en outre réalisée en utilisant une caméra.

7. Procédé selon l'une quelconque des revendications 1 à 6, dans lequel au moins l'un parmi les premier et deuxième marquages distinctifs comprend l'un parmi :
- une intersection de routes ;
- un virage ;
- un changement de pente ;
- une irrégularité de la route ; et
- un cassis ou un dos-d'âne.

8. Produit-programme informatique comprenant des parties de code de programme destiné à réaliser le procédé selon l'une quelconque des revendications précédentes lorsque le produit-programme informatique est exécuté sur un ou plusieurs dispositifs informatiques.

9. Produit-programme informatique selon la revendication 8, mémorisé sur un support d'enregistrement lisible sur ordinateur.

10. Appareil (100) d'assistance à la conduite d'un véhicule (10), l'appareil étant configuré pour être au moins partiellement contenu dans le véhicule, et comprenant :
- un identificateur (1003) adapté pour identifier un premier marquage distinctif (M1) sur ou au niveau d'une route sur laquelle le véhicule se déplace ;
- un dispositif d'extraction (1004) adapté pour extraire, à partir d'une base de données (1002), une distance (ΔM) entre le premier marquage distinctif et un deuxième marquage distinctif (M2) sur ou au niveau d'une route ;
- un calculateur (1005) adapté pour calculer, sur la base de la position du véhicule par rapport au premier marquage distinctif, la distance relative du véhicule par rapport au deuxième marquage distinctif en prenant en compte la distance entre les premier et deuxième marquages distinctifs ; et
- un assistant (1006) adapté pour assister la conduite du véhicule sur la base de la distance relative calculée,
**caractérisé en ce que** :
- un capteur d'accélération est une partie de l'identificateur (1003).

11. Appareil (200) pour l'apprentissage d'au moins une distance entre un premier marquage distinctif (M1) sur ou au niveau d'une route et d'au moins un deuxième marquage distinctif (M2) sur ou au niveau d'une route, l'appareil étant configuré pour être au moins partiellement contenu dans le véhicule, et comprenant :
- un identificateur (1003) adapté pour identifier les premier et deuxième marquages distinctifs ;
- un calculateur (1005) adapté pour calculer la distance entre les premier et deuxième marquages distinctifs ; et
- une base de données (1002) adaptée pour mémoriser la distance entre les premier et deuxième marquages distinctifs,
**caractérisé en ce que** :
- un capteur d'accélération est une partie de l'identificateur (1003).

12. Appareil selon la revendication 10 ou 11, comprenant au moins l'un parmi ce qui suit :
- une caméra supplémentaire en tant que partie supplémentaire de l'identificateur (1003) ;
- un système de navigation à l'estime comprenant au moins un capteur d'inertie en tant que partie du calculateur (1005) ; et
- un capteur de positionnement en tant que partie du calculateur (1005).

13. Appareil selon l'une quelconque des revendications 10 à 12, dans lequel l'appareil est mis en oeuvre comme au moins une partie d'un système avancé d'assistance à la conduite, ADAS, en particulier en tant qu'au moins une partie de :
- un système d'éclairage avant adaptatif, AFS ;
- un régulateur de vitesse adaptatif, ACC ; ou
- un assistant pour les intersections.

14. Structure de données (10 021) destinée à mémoriser au moins une distance entre un premier marquage distinctif (M1) sur ou au niveau d'une route et un deuxième marquage distinctif (M2) sur ou au niveau d'une route, et destinée à assister la conduite d'un véhicule (10), la structure de données comprenant une pluralité d'entrées (E), chaque entrée comprenant :
- un premier champ (F1) adapté pour mémoriser un type du premier marquage distinctif ;
- un deuxième champ (F3) adapté pour mémoriser une position absolue du premier marquage distinctif ; et
- un troisième champ (F6) adapté pour mémoriser une distance (ΔM) entre le premier marquage distinctif et le deuxième marquage distinctif,
**caractérisé en ce que** :
le type du premier marquage distinctif est déterminé en utilisant un capteur d'accélération.

15. Structure de données selon la revendication 14, dans laquelle chaque entrée comprend en outre au moins l'un parmi :
- un quatrième champ (F2) adapté pour mémoriser une identification du premier marquage distinctif ;
- un cinquième champ (F5) adapté pour mémoriser une identification du deuxième marquage distinctif ; et
- un sixième champ (F4) adapté pour mémoriser un nombre de deuxièmes marquages distinctifs,
dans lequel :
- les troisième et cinquième champs contiennent une ou plusieurs entrées conformément au nombre mémorisé dans le sixième champ.
